# EUROPEAN PATENT APPLICATION

(11) **EP 2 858 201 A1**
(43) Date of publication of application: **08.04.2015**
(21) Application number: 13187526.2
(22) Date of filing: 07.10.2013
(51) Int. Cl.: H02J 3/38

(54) **Detection of islanding condition in electricity network**

(71) Applicant: ABB Technology AG, 8050 Zürich (CH)
(72) Inventor: Laaksonen, Hannu, 65320 Vaasa (FI)
(74) Representative: Kolster Oy Ab

(57) **Abstract**

A method and a system for detecting an islanding condition in an electricity network (EN), wherein an islanding condition in the electricity network (EN) is monitored and a measure (P_{unb(meas)}, Q_{unb(meas)}) of a power unbalance (P_{unb}, Q_{unb}) of the electricity network (EN) is determined and controlled.

## Description

### FIELD OF THE INVENTION

The present invention relates to detection of an islanding condition in electricity distribution networks.

### BACKGROUND OF THE INVENTION

Distributed energy resource (DER) units, like solar cells, wind turbines or generators, for example, may provide a local, additional power generation unit, whereby the power generated by the distributed energy resource unit may provide a reserve capacity of electricity or it may replace at least part of the power purchased from a common electricity network. An increasing demand for renewable energy sources and minimization of power outages, for example, gives rise to a need for connecting these distributed energy resource units to common electricity networks so that the distributed energy resource units would also be a part of the common electricity network so that power generated by the distributed energy resource units may also be consumed in some other part of the network and not just only close to the site of the distributed energy resource units, whereby distributed energy resource units may be used to provide distributed generation (DG) of electricity.

Distributed energy resource units connected to the common electricity network provide in this electricity network so called islands, i.e. parts of the common electricity network, which can be disconnected from other parts of the common electricity network and which are provided with power generation of their own. Depending for example on the power generation capacity of the distributed energy resource unit, as well as the size of the network part belonging to the specific island and loads connected to it, an island may or may not be operated independently in case of a loss-of-mains (LOM) situation, i.e. in situations wherein the main power provided by the common electricity network is lost for example due to a fault somewhere in the interconnected electricity network. If the island cannot be operated independently during loss-of-mains, the distributed energy resource unit should be disconnected from the network in a controlled way. If the island can be operated independently, the transition to the islanded operation, which may also be called isolated operation, should also take place in a controlled way so as to support the independent operation of the island during the loss-of-mains. In either case, reliable detection of islanding, also called loss-of-mains protection or anti-islanding protection, is needed.

Techniques used for islanding detection can be generally divided into two main categories, i.e. communication based methods and local detection based methods. The local detection based methods include both active methods and passive methods. In active methods, distributed energy resource units or distributed generation units send test signals to the network and monitor responses of the network to these test signal, whereas in passive methods transient events occurred in the network are monitored.

Benefits of communication based islanding detection methods include the lack of non-detection zone (NDZ) near a power balance situation and the lack of undesired DG trips, that is, nuisance tripping due to other network events. However, the communication based islanding detection method requires high-speed operation and the main challenges of communication based islanding detection methods are availability and cost of high-speed communication as well as flexibility for network topology changes.

As stated above, in local active islanding detection methods test signals are sent to the electricity network. These test signals, however, may also introduce disturbances into the electricity network which may become a serious problem when the number of distributed energy resource units increases in the future.

Local passive islanding detection methods are based on monitoring one or more electricity network quantities locally and making a final decision about the detection of loss-of-mains without directly interacting with the electricity network. Known passive islanding detection methods are based for example on monitoring frequency (*f*), rate-of-change-of-frequency (ROCOF / *df*/*dt*), vector shift (VS), phase jump or voltage (*U*). A problem with these known passive islanding detection methods is a failure to detect islanding near a power balance situation, which may lead to nuisance tripping of distributed energy resource units.

In recent years the main focus in the field of islanding detection methods has been on the communication based methods and the local active islanding detection methods, whereas the study of the local passive islanding detection methods has been on the decrease due to a belief that they could not fulfil the demands in terms of speed, reliability, and avoidance of unnecessary trip decisions. However, because the trend in the future will be, for example due to power availability requirements, more and more to allow islanded operation, and because the regulations set for the network operators, at least presently, do not allow the detection of change from an interconnected system operation to islanded operation to rely solely on the network operator's switch-gear position signals, i.e. communication based methods, a need still exists for reliable local passive islanding detection methods wherein problems relating to non-detection zones or nuisance tripping of distributed energy resource units are reduced.

### BRIEF DESCRIPTION OF THE INVENTION

An object of the present invention is to provide a novel solution for detection of islanding.

The invention is characterized by the features of the independent claims.

According to an embodiment of a method for detecting an islanding condition in an electricity network, the method comprises monitoring at a point of the electricity network an islanding condition in the electricity network by at least one passive islanding detection method, determining a measure of a power unbalance at the same point of the electricity network, comparing the determined measure of the power unbalance with a minimum limit value set for the power unbalance at the point of the electricity network, and controlling the measure of the power unbalance of the electricity network such that the determined measure of the power unbalance is at least equal to or more than the minimum limit value set for the measure of the power unbalance.

According to an embodiment of the method, the measure of the power unbalance of the electricity network is increased at the point of the electricity network if the determined measure of the power unbalance at the point of the electricity network is lower than the minimum limit value set for the measure of the power unbalance at the point of the electricity network.

According to an embodiment of the method, the measure of the power unbalance of the electricity network is decreased at the point of the electricity network if the measure of the power unbalance at the point of the electricity network is more than a maximum limit value set for the measure of the power unbalance at the point of the electricity network.

According to an embodiment of the method, the point of the electricity network, at which the islanding condition in the electricity network is monitored and the measure of the power unbalance of the electricity network is determined comprises a device capable of connecting and disconnecting parts of the electricity network.

According to an embodiment of a method, the measure of the power unbalance of the electricity network is controlled by controlling at least one of the following: a power output of a distributed energy resource unit connected to the electricity network, an operation of a load connected to the electricity network, and an operation of another network component capable of feeding or consuming power.

According to an embodiment of the method, the power unbalance, whose measure is to be determined is a reactive power unbalance.

According to an embodiment of the method, when the power output of the distributed energy resource unit is controlled, it is controlled the reactive power output of the distributed energy resource unit.

According to an embodiment of the method, the minimum limit value and/or the maximum limit value set for the power unbalance is/are adaptively determined on the basis of a prevailing electricity network topology configuration.

According to an embodiment of the method, settings of a loss-of-mains-protection based on the passive islanding detection method are adaptively variable on the basis of the determined measure of the power unbalance.

According to an embodiment of the method, the electricity network comprises a number of galvanically interconnected feeders and wherein the measures of the power unbalances at the beginning of the feeders are controlled such that the measures of the power unbalances at the beginning of the feeders substantially compensate each other.

According to an embodiment of a system for detecting an islanding condition in an electricity network, the system comprises means for monitoring at a point of the electricity network an islanding condition in the electricity network by at least one passive islanding detection method, means for determining a measure of a power unbalance at the same point of the electricity network, means for comparing the determined measure of the power unbalance with a minimum limit value set for the power unbalance at the point of the electricity network, and means for controlling the measure of the power unbalance of the electricity network such that the determined measure of the power unbalance is at least equal to or more than the minimum limit value set for the measure of the power unbalance.

According to an embodiment of the system, the means for controlling the measure of the power unbalance is arranged to increase the measure of the power unbalance of the electricity network at the point of the electricity network if the determined measure of the power unbalance at the point of the electricity network is lower than the minimum limit value set for the measure of the power unbalance at the point of the electricity network.

According to an embodiment of the system, the means for controlling the measure of the power unbalance is arranged to decrease the measure of the power unbalance of the electricity network at the point of the electricity network if the determined measure of the power unbalance at the point of the electricity network is more than a maximum limit value set for the measure of the power unbalance at the point of the electricity network.

According to an embodiment of the system, the point of the electricity network, at which the islanding condition in the electricity network is monitored and the measure of the power unbalance of the electricity network is determined comprises a device capable of connecting and disconnecting parts of the electricity network.

According to an embodiment of the system, the means for controlling the measure of the power unbalance of the electricity network is configured to control at least one of the following: a power output of a distributed energy resource unit connected to the electricity network, an operation of a load connected to the electricity network, and an operation of another network component (NC) capable of feeding or consuming power.

According to an embodiment of the system, the power unbalance, whose measure is to be determined is a reactive power unbalance.

According to an embodiment of the system, when the power output of the distributed energy resource unit is controlled, it is controlled the reactive power output of the distributed energy resource unit.

According to an embodiment of the system, the system comprises means for adaptively determining minimum limit value and/or the maximum limit value set for the power unbalance on the basis of the prevailing electricity network topology configuration.

According to an embodiment of the system, settings of a loss-of-mains-protection based on the passive islanding detection method are adaptively variable on the basis of the determined measure of the power unbalance.

According to an embodiment of the system, the electricity network comprises a number of galvanically interconnected feeders and wherein the means for controlling the measures of the power unbalances of the feeders is arranged to control the measures of the power unbalances at the beginning of the feeders such that the measures of the power unbalances at the beginning of the feeders substantially compensate each other.

### BRIEF DESCRIPTION OF THE DRAWINGS

In the following, the invention will be described in greater detail by means of preferred embodiments with reference to the accompanying drawings, in which
Figure 1 is a schematic illustration of an electricity network;
Figure 2 is a schematic illustration, in a form of a flow diagram, of a method for improving detection of an islanding condition; and
Figure 3 schematically discloses a simulation example relating to an operation of a local passive islanding detection method.

For the sake of clarity, the figures show the embodiments in a simplified manner. In the figures, like reference numerals identify like elements.

### DETAILED DESCRIPTION OF THE INVENTION

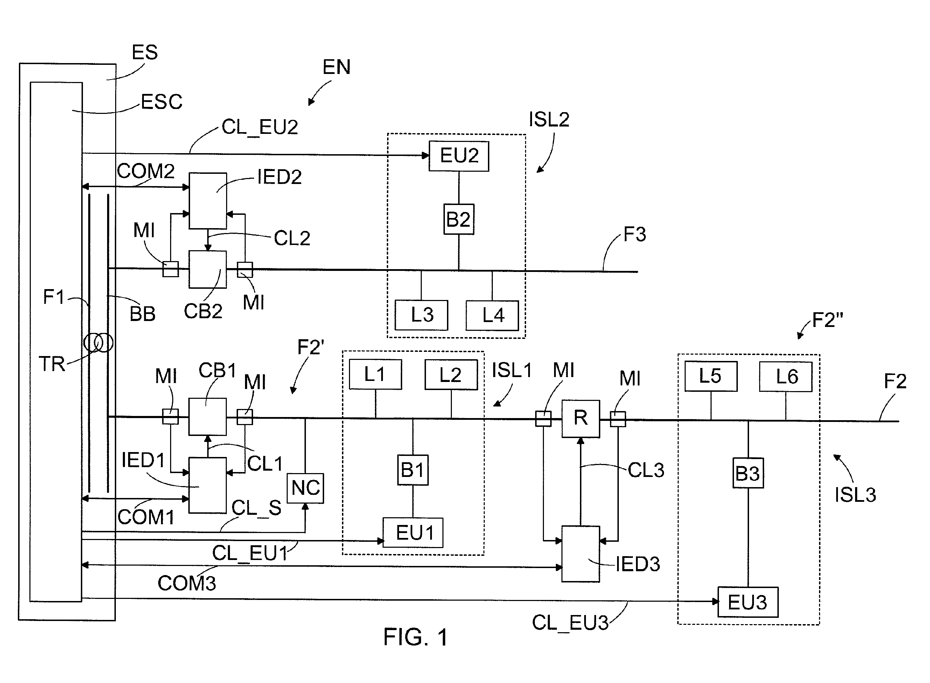

Figure 1 is a schematic illustration of an electricity distribution network EN, which below may also be called an electricity network EN. Figure 1 schematically shows an electric station ES with one incoming feeder F1 and two outgoing feeders F2 and F3, the number of incoming feeders and outgoing feeders being not, however, limited to that shown in Figure 1. For the sake of clarity, only one line, i.e. a line denoted by reference mark F1, F2 or F3, is used to indicate all phase lines of the respective feeder, the actual number of the phase lines being dependent on local electricity distribution practices. In the following, it is assumed that the incoming feeder F1, which may also be called the first feeder F1, represents a high voltage transmission line and the outgoing feeders F2 and F3, which may also be called the second feeder F2 and the third feeder F3, represent medium voltage distribution lines, whereby the electric station ES represents a primary distribution substation. The electric station ES comprises a busbar BB, which is connected to the feeder F1 through at least one transformer TR, the purpose of the transformer TR being to transform a high voltage level used in transmission lines into a medium voltage level used in medium voltage distribution lines. The outgoing feeders F2 and F3 are connected to the busbar BB, whereby the feeders F2 and F3 are connected galvanically to each other and whereby the electric station ES provides the main power supply for loads to be connected to the feeders F2 and F3. The electric station ES further comprises an electric station computer ESC, which may comprise a Supervisory Control and Data Acquisition system or a similar system for monitoring and controlling equipment at the electric station ES and/or equipment connected to the electricity network EN.

The electricity network EN of Figure 1 further comprises, at the beginning of the second feeder F2, a first circuit breaker CB1, and at the beginning of the third feeder F3, a second circuit breaker CB2. By opening the circuit breakers CB1 and CB2, the feeders F2 and F3 may be disconnected from the busbar BB for preventing power supply to the feeders F2 and F3, and by closing the circuit breakers CB1 and CB2 the feeders F2 and F3 may again be connected to the busbar BB for allowing power supply to the feeders F2 and F3. A need to disconnect the feeder F2 or F3 from the busbar BB may arise because of a fault in either of the feeders F2 and F3, whereby equipment or components both in the faulty feeder as well as in other parts of the galvanically interconnected electricity network can be protected against harmful overvoltage or overcurrent. After the fault has been cleared, the disconnected feeder may again be connected to the busbar BB by closing the specific circuit breaker.

The electricity network EN further comprises a first intelligent electronic device IED1 configured to control the operation of the first circuit breaker CB1 through a control line CL1, and a second intelligent electronic device IED2 configured to control the operation of the second circuit breaker CB2 through a control line CL2. The intelligent electronic devices IED1 and IED2 are configured to measure, through appropriate measurement instruments MI, quantities of the electricity network EN, such as phase voltages U and phase currents I prevailing in the specific feeder. On the basis of the measured quantities of the electricity network EN, the intelligent electronic devices are configured to determine other quantities of the electricity network EN, such as frequency of the network or power flowing in the feeder, and/or whether or not a fault exists on the corresponding feeder. If at least one of the intelligent electronic devices IED1 or IED2 indicates that a fault exists on the corresponding feeder, the specific intelligent electronic device sends to the corresponding circuit breaker through the control line a control signal for opening the corresponding circuit breaker, thus preventing power supply to the corresponding feeder. After a predetermined elapsed time, the specific intelligent electronic device may send to the corresponding circuit breaker through the control line a new control signal for closing the corresponding circuit breaker, thus restoring the power supply to the feeder.

The electricity network EN of Figure 1 further comprises, in a last part F2" of the second feeder F2, a recloser R which can be used to connect the last part of the second feeder F2 to a first part F2' of the second feeder F2, or to disconnect the last part F2" of the second feeder F2 from the first part F2' of the second feeder F2. The operation of the recloser R is controlled by means of a third intelligent electronic device IED3, which is connected to a recloser R through a control line CL3.

The intelligent electronic devices IED1, IED2, IED3 may for example comprise a microprocessor or a signal processor and possibly one or more memory units to run or execute a software program code for carrying out the sampling of the quantities to be measured in the electrical network, such as phase voltages and phase currents, and to carry out necessary computation for the determination of the further quantities of the electrical network EN, as well as to determine whether or not a fault exists in the protected zone of the intelligent electronic device.

The intelligent electronic devices IED1, IED2 and IED3 are connected to the electric station computer ESC through wired or wireless communication channels COM1, COM2, COM3, so that the intelligent electronic devices IED1, IED2 and IED3 may send information to the electric station computer ESC and/or receive information or control commands from the electric station computer ESC.

In the example of Figure 1, the intelligent electronic devices IED1, IED2, and IED3 are arranged at points of the electric network EN which comprise means, such as circuit breakers or reclosers, for connecting and disconnecting parts of the electricity network EN. Those points of the electricity network EN typically also comprise measurement instruments MI which are arranged to measure quantities of the electricity network, such as phase voltages U and phase currents I prevailing in the network. Typically, the measurement instruments MI are located at the side of the electric station ES in respect of the circuit breaker or recloser. However, Figure 1 shows measurements instrument MI at both sides of the circuit breakers CB1 and CB2 and the recloser R, i.e. at the side of the electric station ES and at the side of the ends of the feeders F2 and F3, which is also a possible configuration when considering the detection of the islanding condition to be described below.

Figure 1 shows only one possible configuration for operating the circuit breakers CB1, CB2 and the recloser R. According to an embodiment, the third intelligent electronic device IED3 could be omitted and the measurement instruments at the recloser R could be connected to the first intelligent electronic device IED1, whereby the first intelligent electronic device IED1 would be connected to the recloser R for controlling the operation of the recloser R on the basis of the information provided by the measurement instruments MI at the recloser R. According to a further embodiment, all the intelligent electronic devices IED1, IED2, IED3 could be omitted and the measurement instruments at the circuit breakers CB1, CB2 and the recloser R could be connected to the electric station computer ESC, which would be connected to the circuit breakers CB1, CB2 and the recloser R for controlling their operation on the basis of the information provided by corresponding measurement instruments MI.

The electricity network EN of Figure 1 further comprises three distributed energy resource units EU1, EU2, and EU3 providing local electric power generation. Below, the distributed energy resource units EU1, EU2, and EU3 may also be called energy units EU1, EU2, and EU3. The energy units EU1, EU2, and EU3 can be connected to be part of the electricity network EN and disconnected from the electricity network EN through corresponding breakers B1, B2, and B3. The energy units typically comprise an actual electric power generation unit for generating or providing electric power and a control unit to control the supply of the generated electric power to the network. The power generation unit may for example be a solar cell, a wind turbine or a generator such as a directly connected synchronous generator or a directly connected induction generator. The possible control unit may be a kind of a converter or an inventer, for example.

The electricity network EN of Figure 1 further comprises six loads, i.e. loads L1 and L2 connected to the first part F2' of the second feeder F2, loads L5 and L6 connected to the last part F2" of the second feeder F2, and loads L3 and L4 connected to the third feeder F3.

In the electricity network EN the distributed energy resource units EU1, EU2, and EU3 provide islands which may operate independently in a situation wherein the main power supply from the electric station ES is not available. The energy unit EU1 and the loads L1 and L2 connected to the first part F2' of the second feeder F2 may be considered to provide a first island ISL1, which may operate independently, i.e. have an islanded operation, if the circuit breaker CB1 opens. The energy unit EU3 and the loads L5 and L6 may be considered to provide a third island ISL3, which may operate independently if either the circuit breaker CB1 or the recloser R opens. The first island ISL1 and the third island ISL3 may also provide a common islanded operation, if the circuit breaker CB1 opens but the recloser R remains closed. The energy unit EU2 and the loads L3 and L4, in turn, may be considered to provide a second island ISL2, which may operate independently if the circuit breaker CB2 opens. The islands ISL1, ISL2, and ISL3 are denoted in Figure 1 schematically with boxes drawn in broken lines.

In order for the islands ISL1, ISL2 or ISL3 to be able to operate independently in case of a loss of the main power, the opening of the specific circuit breaker CB1, CB2 or recloser R should be detected by passive islanding detection methods reliably enough for the transition to the islanded operation of any of the islands ISL1, ISL2, ISL3 to take place in a controlled manner. Alternatively, if the islanded operation of at least one island ISL1, ISL2, ISL3 is not allowed, the detection of the islanding condition should still be detected reliably enough for the specific energy unit EU1, EU2, and EU3 to be disconnected from the network in a controlled manner by opening the specific breaker B1, B2 or B3.

In the following, a method and system which improve and ensure reliable islanding detection in electricity distribution networks by means of local passive islanding detection methods are disclosed. The method and the system are based on the use of one or more local passive islanding detection methods, but the reliability of the operation of these local passive islanding detection methods is increased by providing at least a specific minimum amount or measure of a power unbalance at a network point where an islanding condition is monitored.

Generally, a power balance situation of the electricity network means that an equal amount of power consumption and production is provided inside the part of the electricity network which is capable of creating an island through separation from the rest of the electricity distribution network by opening a circuit breaker, a disconnector, a recloser or a switch. The power balance of the electricity network may refer to an active or real power balance or a reactive power balance. A power balance also means that a power flow through the circuit breaker, the disconnector, the recloser or the switch is zero before a possible opening of the circuit breaker, the disconnector, the recloser or the switch. Known local passive islanding detection methods cannot detect islanding near this kind of a power balance situation, because they typically rely on a change in network frequency, voltage, rate-of-change-of-frequency, vector shift or phase angle drift. If islanding occurs in a total power balance, the frequency, voltage or another electricity network quantity will not change after islanding. In addition, in a near power balance situation, a change in frequency, voltage or another electricity network component is too slow to ensure reliable and fast islanding detection by means of these traditional passive islanding detection methods. Therefore, it is stated that these passive islanding detection methods have a non-detection zone (NDZ), which means that if an active and/or a reactive power flow through the circuit breaker, the disconnector, the recloser or the switch is before islanding under certain limits, i.e. too small, no sufficient active and/or reactive power unbalance is provided to enable those methods to detect islanding. In other words, this means that the power flow through the circuit breaker, the disconnector, the recloser or the switch must be higher than a certain minimum limit to ensure that the active or reactive power unbalance in the possible island part of the network is large enough for the traditional passive islanding detection method to work correctly and in a sufficient time frame.

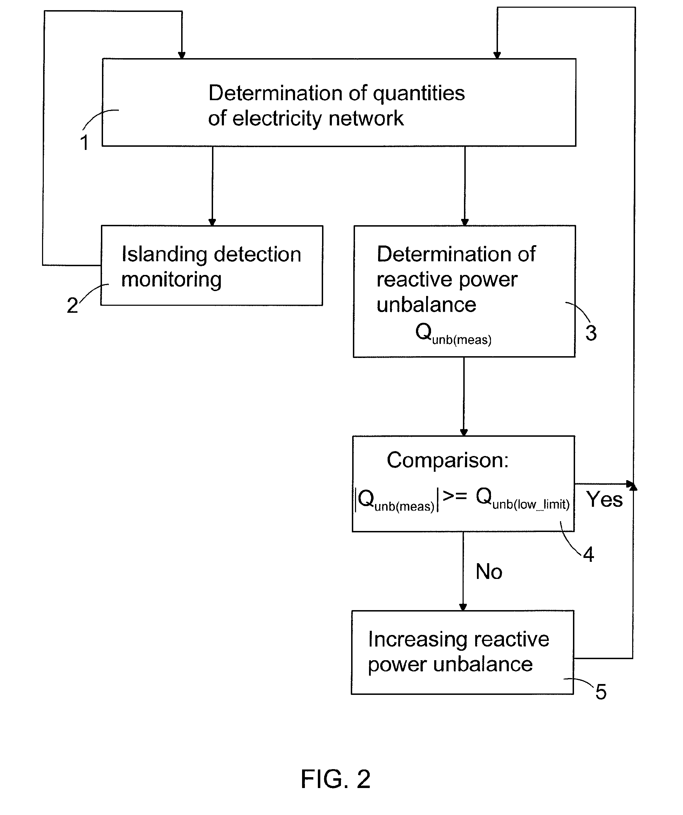

In the method and system presented below, the power unbalance of the electricity network EN may refer to an active or real power unbalance P_{unb} or to a reactive power unbalance Q_{unb}. Figure 2 discloses a schematic representation of the main steps of the method in a form of a flow diagram when it is assumed that the detection of an islanding condition is considered in view of the reactive power unbalance Q_{unb} and the island ISL1.

In the method step referred to by reference number 1 in Figure 2, different quantities of the electricity network EN to be used in the detection of an islanding condition are determined. This method step includes at least a substantially continuous measurement of at least phase voltages U and phase currents I of all the phases of the second feeder F2 at the first circuit breaker CB1. The substantially continuous measurement refers to using in the measurement a sampling rate high enough for allowing reliable measurements of the voltage and current signals.

Depending on the actual local passive islanding detection method used, this method step may also include measurements of some further quantities of the electricity network EN, or it may include determination of some further quantities of the electricity network on the basis of the measured voltage and current signals. These further quantities of the electricity network EN may be for example a frequency of the network or harmonic frequencies of the phase voltages U and the phase currents I. The actual measurement of the quantities to be measured may be provided by the measurement instrument MI on the side of the electric station ES in respect of the first circuit breaker CB1, for example, the measurement operation being controlled by the intelligent electronic device IED1. Any determination of such further quantities, if needed, may be provided by the intelligent electronic device IED1.

In the method step referred to by reference number 2 in Figure 2, one or more local passive methods for detecting the islanding condition are used to monitor whether an islanding condition is present or not, i.e. whether the circuit breaker CB1 is open or not. In this method step, the quantities of the electricity network EN determined in the method step referred to by reference number 1 are used. Any known passive islanding detection method, such as monitoring of frequency (*f*), rate-of-change-of-frequency (ROCOF / *df*/*dt*), vector shift (VS), phase jump or voltage (*U*), may be used. The monitoring of the islanding condition may take place in the intelligent electronic device IED1 and/or in the electric station computer ESC, depending on where the methods for monitoring the islanding condition are configured to be performed. The operation of the islanding detection method may be substantially continuous, i.e. the islanding detection method is executed every time new samples of measured or determined electricity network quantities are available. Alternatively, the islanding detection method may be executed in predetermined periods.

In the method step referred to by reference number 3 in Figure 2, an amount or a measure Q_{unb(meas)} of the reactive power unbalance Q_{unb} at the point of the first circuit breaker CB1 is determined on the basis of the quantities of the electricity network EN determined in the method step referred to by reference number 1 above. The measure Q_{unb(meas)} of the reactive power unbalance Q_{unb} can be determined on the basis of the phase voltage U measurements and reactive parts of the phase current I measurements. The measure Q_{unb(meas)} of the reactive power unbalance Q_{unb} comprises information about the actual absolute value of the reactive power unbalance Q_{unb} as well as information on the direction of the reactive power flow. It may be determined that the reactive power flow having a positive sign indicates the reactive power flow from the direction of the electric station ES towards the direction of the feeders F2 and F3, and that the reactive power flow having a negative sign indicates the reactive power flow from the direction of the feeders F2 and F3 towards the direction of the electric station ES. The measure Q_{unb(meas)} of the reactive power unbalance Q_{unb} may be determined either at the intelligent electronic device IED1 or at the electric station computer ESC, if the quantities of the electricity network EN determined in the method step referred to by reference number 1 are transmitted by the intelligent electronic device IED1 to the electric station computer ESC through the communication channel COM1.

In the method step referred to by reference number 4, the measure Q_{unb(meas)} of the reactive power unbalance Q_{unb} determined in the method step referred to by reference number 3 is compared with a minimum limit value Q_{unb(min_limit)} set for the reactive power unbalance Q_{unb} at the same point as where the measure of the reactive power unbalance is determined, i.e. in this example at the circuit breaker CB1. The minimum limit value Q_{unb(min_limit)} determines the minimum amount or measure of the reactive power unbalance Q_{unb} which should prevail at the point of the circuit breaker CB1 with a prevailing network topology configuration in order to enable the passive islanding detection method to detect a possible islanding condition. The minimum limit value Q_{unb(min_limit)} may be set either in the electric station computer ESC and/or in the intelligent electronic device IED1, meaning that the comparison operation may be performed either in the electric station computer ESC and/or in the intelligent electronic device IED1.

If an absolute value IQ_{unb(meas)}I of the measure Q_{unb(meas)} of the reactive power unbalance Q_{unb} is equal to or more than the minimum limit value Q_{unb(min_limit)} set for the reactive power unbalance Q_{unb}, it is considered that the amount or measure of the reactive power unbalance Q_{unb} at the first circuit breaker CB1 is high enough for the passive islanding detection methods to be able to detect the islanding condition taking place if the circuit breaker CB1 opens. In such a case, no need exists to make any operations for increasing the amount or measure of the reactive power unbalance Q_{unb} at the first circuit breaker CB1.

However, if the absolute value of the measure Q_{unb(meas)} of the reactive power unbalance Q_{unb} is less than the minimum limit value Q_{unb(min_limit)} set for the reactive power unbalance Q_{unb}, it is considered that the amount or measure of the reactive power unbalance Q_{unb} at the first circuit breaker CB1 is not high enough for the passive islanding detection methods to be able to detect the islanding condition taking place at the circuit breaker CB1. In such a case, the amount or measure of the reactive power unbalance Q_{unb} should be increased for enabling the passive islanding detection methods to detect the possible islanding condition. If the above-described comparison operation is performed in the intelligent electronic device IED1, the result of the comparison operation and either the determined measure Q_{unb(meas)} of the reactive power unbalance Q_{unb} or the amount of the difference between the measure Q_{unb(meas)} of the reactive power unbalance Q_{unb} and the minimum limit value Q_{unb(low_limit)} set for the reactive power unbalance Q_{unb} are transmitted to the electric station computer ESC through the communication channel COM1, depending on the information already available in the electric station computer ESC.

If the absolute value of the measure Q_{unb(meas)} of the reactive power unbalance Q_{unb} is less than the minimum limit value Q_{unb(low_limit)} set for the reactive power unbalance Q_{unb} at the first circuit breaker CB1, the amount or measure of the reactive power unbalance Q_{unb} should be increased at the first circuit breaker CB1 in order for the passive islanding detection methods to detect the islanding condition if the circuit breaker CB1 opens. This method step is referred to by reference number 5 in Figure 2. When the amount or measure of the reactive power unbalance Q_{unb} is increased, the absolute value of the measure Q_{unb(meas)} of the reactive power unbalance Q_{unb} is increased but the sign of the measure Q_{unb(meas)} of the reactive power unbalance Q_{unb} is maintained, meaning that the direction of the reactive power flow is not changed.

According to an embodiment for increasing the reactive power unbalance Q_{unb} at the first circuit breaker CB1, the electric station computer ESC may control, through a control channel CL_EU1, the operation of the energy unit EU1 in order for the operation of the energy unit EU1 to increase the reactive power unbalance Q_{unb} in the second feeder F2 of the electricity network EN. The control command for controlling the amount or measure of the reactive power unbalance Q_{unb} by the energy unit EU1 could be transmitted to the control unit of the energy unit EU1 also through a protective device which is placed at the coupling point of the energy unit EU1, i.e. at the breaker B1, and which is provided for controlling the operation of the breaker B1. The desired direction of the reactive power flow, i.e. towards the feeder F2 or away from the feeder F2, is taken into account when the energy unit EU1 is controlled to increase the reactive power unbalance either by feeding the reactive power to the electricity network or by consuming the reactive power from the network.

Alternatively, or in combination with the embodiment disclosed in the previous paragraph, the electric station computer ESC may be configured to control, through appropriate control channels (not presented in Figure 1), the operation of the load L1 and/or the load L2 in order for the operation of the load L1 and/or the load L2 to provide an increase in the reactive power unbalance Q_{unb} in the second feeder F2 of the electricity network EN. For example, loads controlled by frequency converters can be used to feed reactive power to the electricity network or consume reactive power from the network.

In the example above, when the increase in the reactive power unbalance at the first circuit breaker CB1 is provided by the change in the operation of the energy unit EU1 close to the circuit breaker CB1, the reactive power unbalance Q_{unb} through the circuit breaker CB1 changes but the actual reactive power flow in the feeder F2 and to the loads connected to the feeder F2 does not change.

According to an embodiment for increasing the reactive power unbalance Q_{unb} at the first circuit breaker CB1, either alone or in combination with either of the methods disclosed above, the electric station computer ESC could also be configured to control, through a control channel CL_EU3, the operation of the energy unit EU3 in order for the operation of the energy unit EU2 to affect the reactive power unbalance in the second feeder F2 of the electricity network EN. This alternative may affect the reactive power flow in the second feeder F2.

According to an embodiment for increasing the reactive power unbalance Q_{unb} at the first circuit breaker CB1, either alone or in combination with any of the embodiments disclosed above, the electric station computer ESC may also be configured to control, through appropriate control channels (not presented in Figure 1), the operation of the load L5 and/or the load L6 in order for the operation of the load L5 and/or the load L6 to provide an increase in the reactive power unbalance in the second feeder F2 of the electricity network EN.

According to an embodiment for increasing the reactive power unbalance Q_{unb} at the first circuit breaker CB1, the electricity network EN may also comprise one or more specific network components capable of feeding or consuming reactive power, whose operation is controlled for example by the electric station computer ESC in order for the necessary extra reactive power unbalance Q_{unb} to be provided in the second feeder F2 of the electricity network EN at the first circuit breaker CB1. Examples of such network components include a capacitor, a reactor, a static var compensator or an energy storage, which may be based on batteries, for example. In Figure 1 the specific network component capable of feeding or consuming reactive power is indicated schematically with a box denoted by reference mark NC, and a control channel from the electric substation computer ESC to this network component NC is indicated by reference mark CL_S.

An advantage of providing, if necessary, an increase in the amount or measure Q_{unb(meas)} of the reactive power unbalance Q_{unb} at the point of the electricity network EN where the islanding condition is monitored is that also the local passive islanding detection methods can be used to detect the islanding condition reliably, because the network condition is not allowed to prevail close to the power balance situation at the point of the electricity network EN where the islanding condition is monitored. The method and system presented above thus ensure that the power balance condition at the network point where the islanding condition is monitored is not in the non-detection zone of the local passive islanding detection methods.

The embodiments disclosed above can also be used for improving the detection of the islanding condition at the second circuit breaker CB2, whereby necessary quantities of the electricity network EN may be provided by the second intelligent electronic device IED2 and corresponding one or more measurement instruments MI at the second circuit breaker CB2, and the electric station computer ESC may be configured to control, through a control channel CL_EU2, the operation of the energy unit EU2. Additionally or alternatively, the operation of the load L3 and/or the load L4 may be controlled such that they provide an increase in the reactive power unbalance Q_{unb} in the third feeder F3 of the electricity network EN at the second circuit breaker CB2.

The embodiments disclosed above can also be used for improving the detection of the islanding condition at the recloser R, whereby necessary quantities of the electricity network EN may be provided by the third intelligent electronic device IED3 and corresponding one or more measurement instruments MI at the recloser R, and the electric station computer ESC may be configured to control, through a control channel CL_EU3, the operation of the energy unit EU3. Additionally or alternatively, the operation of the load L5 and/or the load L6 may be controlled such that they provide an increase in the reactive power unbalance Q_{unb} in the second feeder F2 of the electricity network EN at the recloser R.

In the islanding detection method disclosed above, the unbalance Q_{unb} of the reactive power Q was the quantity of interest of the electricity network. Alternatively, as already shortly mentioned above, the quantity of interest of the electricity network EN may also be the unbalance P_{unb} of the active power P, whereby an amount or measure P_{unb(meas)} of the active power unbalance P_{unb} at a point of the electricity network EN is determined and compared with a minimum limit value P_{unb(min_limit)} set for the active power unbalance P_{unb}. In this embodiment, if the absolute value of the measure P_{unb(meas)} of the active power unbalance P_{unb} at the point of the electricity network EN is less than the minimum limit value P_{unb(min_limit)} set for the active power unbalance P_{unb}, the operation of the energy units EU1, EU2, EU3, loads L1, L2, L3, L4, L5, L6 and/or other possible sources of active power P may be controlled to increase the amount of active power P in the network in order for the active power unbalance P_{unb} to be at least equal to the minimum limit value P_{unb(min_limit)} set for the active power unbalance P_{unb} at the point of the electricity network EN where the islanding condition of the electricity network EN is monitored.

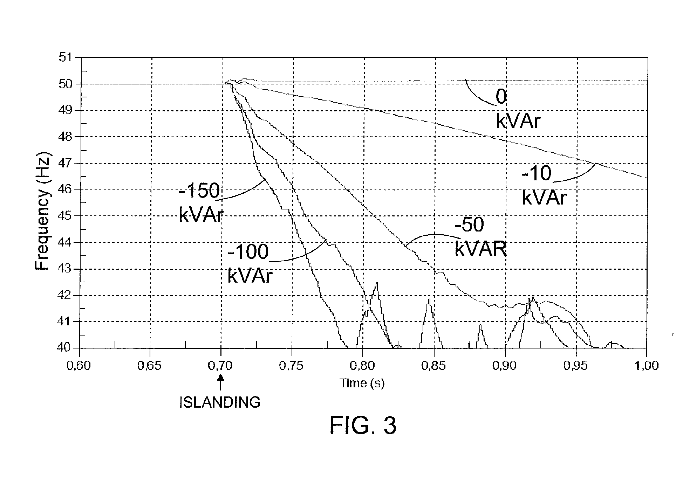

Figure 3 schematically discloses a simulation example relating to an operation of a local passive islanding detection method when the reactive power unbalance Q_{unb} of a feeder is varied. In this simulation example it is stated that the feeder, wherein the islanding takes place, is a medium voltage distribution line and provided with one full-converter connected distributed energy resource unit with a nominal active power output of 415 kW and a nominal reactive power output of -177 kVAr. Only passive load, i.e. no motor load or the like with inertia, is connected to the feeder. It is assumed that the operation of the passive islanding detection method is based on the monitoring of the frequency behaviour of the feeder.

In the example of Figure 3 it is determined that the islanding takes place at a time instant of 0.7 seconds, and five different values for the measure of the reactive power unbalance of the feeder are used, the measures of the reactive power unbalance being -150 kVAr, -100 kVAr, -50 kVAr, -10 kVAr, and 0 kVAr. The lines shown in Figure 3 are denoted by respective values for the measures of the reactive power unbalance. The measure of the active power unbalance was -8 kW in each case.

From the example of Figure 3 it can be seen that the higher the absolute value of the reactive power unbalance, the more rapid or intensive the changes in the frequency value after the islanding has taken place. It can also be seen in Figure 3 that when the measure of the reactive power unbalance is 0 kVAr, i.e. the feeder is in balance as far as a reactive power balance is concerned, only a minor short-duration transient occurs in the frequency until the frequency value stabilizes into a specific value, and it is presumable that a loss-of-mains protection being based on the passive islanding detection method operating on the basis on the monitoring of the frequency behaviour of the feeder will fail to detect that the islanding condition has taken place. However, when the power balance situation of the feeder is purposefully affected by increasing the power unbalance of the feeder as presented above, the power balance situation of the feeder is purposefully controlled away from the power balance, i.e. from the non-detection zone of the passive islanding detection method.

Referring to the example of Figure 3, it may also be noted that with directly connected synchronous generators with large inertia as well as with loads with inertia and/or voltage and frequency dependency, the changes in the frequency are much slower than those shown in Figure 3 after islanding has taken place. Therefore, in such of situations the power unbalance should be larger than with only converter connected distributed energy resource units in order for the islanding condition to be detected rapidly enough or at all by means of known passive islanding detection methods.

According to an embodiment, a maximum limit value Q_{unb(max_limit)}, P_{unb(max_limit)} is set for the reactive power unbalance Q_{unb} or the active power unbalance P_{unb}, the absolute value of the maximum limit value being naturally higher than the corresponding minimum limit value. The maximum limit value represents the maximum amount or measure of the specific power unbalance which should not be exceeded in view of the intended operating condition of the electricity network EN. If the amount or measure of the specific power unbalance is about to exceed the maximum limit value, the electric station computer ESC may control the operations of the energy units EU1, EU2, EU3, the loads L1, L2, L3, L4, L5, L6 or other possible electricity network components in order for the amount or measure of the specific power unbalance to remain between the corresponding minimum and maximum limit values.

According to an embodiment, the minimum limit values Q_{unb(min_limit)}, P_{unb(min_limit)} and/or maximum limit values Q_{unb(max_limit)}, P_{unb(max_limit)} set for the reactive power unbalance Q_{unb} or the active power unbalance P_{unb} are constant and determined such that they provide acceptable reliability of the operation of the passive islanding detection methods in any possible network topology configuration. Alternatively, the minimum limit values Q_{unb(min_limit)}, P_{unb(min_limit)} and/or the maximum limit values Q_{unb(max_limit)}, P_{unb(max_limit)} set for the reactive power unbalance Q_{unb} or the active power unbalance P_{unb} may be adaptive, meaning that the actual value of each limit value may be determined separately for each possible electricity network topology configuration for example by electric station computer ESC, and transmitted to the corresponding intelligent electronic devices for providing the comparison operation, if carried out by the intelligent electronic devices.

In the method disclosed above, the determination of the quantities of the electricity network EN is carried out substantially continuously, because they provide an important part of protection operations against faults occurring in the electricity network EN. Also the monitoring for detecting an islanding condition is carried out substantially continuously. The determination of the measure of the power unbalance, the comparison of the determined measure of the power unbalance with a specific limit value as well as the control of the amount or measure of the power unbalance may be carried out either substantially continuously or at specific intervals.

Settings of the loss-of-mains protection based on the local passive islanding detection method and the monitoring and control of the power unbalance situation as disclosed above may be either constant or adaptive on the basis of the amount or measure of the power unbalance. When the amount or measure of the power unbalance is high, the changes in the electricity network quantity of interest are fast. This means that corresponding set values of the electricity network quantity in the passive islanding detection method and the loss-of-mains protection used may allow for larger changes in the network quantity before providing any actual protection operation, because fast changes in the network quantity enable the required operating time of the loss-of-mains protection to be fulfilled. Similarly, when the amount or measure of the power unbalance is small, the changes in the electricity network quantity of interest are slower, meaning that corresponding set values of the electricity network quantity in the passive islanding detection method and the loss-of-mains protection used must be set to react on smaller changes in the network quantity for providing a sufficiently fast operating time of the loss-of-mains protection.

To guarantee reliable and selective operation of islanding detection and loss-of-mains protection on the basis of the islanding detection monitoring, fast auto-reclosing time for the reclosing circuit breaker CB1, CB2 or the recloser R must be longer than the operation time of loss-of-mains-protection and it can also be adaptive in a way similar to that of the loss-of-mains-protection, i.e. dependent on the measure of the active and/or reactive power unbalance through the corresponding circuit breaker or the recloser. A variation possibility of fast auto-reclosing time could be for example between 150 and 600 ms, and when the power unbalance is small, the fast auto-reclosing open time may be longer and vice versa. This adaptive functionality may be configured in the intelligent electronic devices at the feeders and/or in the electric station computer at the electric station, depending on the configuration of monitoring, controlling and protection operations determined for the network part to be monitored.

According to an embodiment, the power unbalances Q_{unb}, P_{unb} between outgoing feeders are arranged to compensate each other when the amount or measure of the power unbalance is altered as disclosed above. This means, when considering for example the reactive power unbalance Q_{unb}, that if the reactive power unbalance Q_{unb} at the beginning of the second feeder F2 has a specific absolute value and a direction for example from the electric station ES towards the feeder F2, an attempt is made to arrange the reactive power unbalance Q_{unb} at the beginning of the third feeder F3 to have the same absolute value as the absolute value of the reactive power unbalance Q_{unb} at the beginning of the second feeder F2 but with an opposite flow direction, i.e. from the feeder F3 towards the electric station ES. This means that the reactive power unbalances in the feeders F2 and F3 would then compensate each other so that no feed of the reactive power to the feeder F1 representing the transmission line, or consumption of the reactive power from the feeder F1, exists, whereby it is possible that the operation of the transmission line may not be affected at all or it can be decreased or minimized when the amount or measure of the power unbalances in the feeders F2 and F3 are altered.

It will be obvious to a person skilled in the art that, as technology advances, the inventive concept can be implemented in various ways. The invention and its embodiments are not limited to the examples described above but may vary within the scope of the claims.

In the example disclosed above, the solution for detecting islanding is shown in connection with a medium voltage distribution network, but the solution may also be used in low voltage networks, if corresponding distributed energy resource units for generation of electricity, corresponding equipment for measuring the necessary quantities for determining the power unbalance at specific points of the network, as well as corresponding equipment for controlling the operation of the distributed energy resource units or other network components are provided such that the necessary amount of a power unbalance is provided for ensuring the proper operation of the methods intended for local passive islanding detection.

Figure 1 shows, at the first circuit breaker CB1, at the second circuit breaker CB2 and at the recloser R, measurement instruments MI set both at the side of the electric station ES and the side of the feeder F2, F3 in respect of the circuit breakers CB1 and CB2 and the recloser R. Typically, the measurement instruments MI are available, in respect of the circuit breakers CB1 and CB2, at the side of the electric station ES only. However, if measurement instruments MI are available, in respect of the circuit breakers CB1 and CB2, also at the side of the feeder F2, F3, the isolated operation of the island ISL1, ISL2 or ISL 3 may be centrally monitored and controlled also during loss-of-mains situations.

## Claims

1. A method for detecting an islanding condition in an electricity network (EN), the method comprising
monitoring at a point of the electricity network (EN) an islanding condition in the electricity network (EN) by at least one passive islanding detection method,
determining a measure (P_{unb(meas)}, Q_{unb(meas)}) of a power unbalance (P_{unb}, Q_{unb}) at the same point of the electricity network (EN),
comparing the determined measure (P_{unb(meas)}, Q_{unb(meas)}) of the power unbalance (P_{unb}, Q_{unb}) with a minimum limit value (P_{unb(min_limit)}, Q_{unb(min_limit)}) set for the power unbalance (P_{unb}, Q_{unb}) at the point of the electricity network (EN), and
controlling the measure (P_{unb(meas)}, Q_{unb(meas)}) of the power unbalance (P_{unb}, Q_{unb}) of the electricity network (EN) such that the determined measure (P_{unb(meas)}, Q_{unb(meas)}) of the power unbalance (P_{unb}, Q_{unb}) is at least equal to or more than the minimum limit value (P_{unb(min_limit)}, Q_{unb(min_limit)}) set for the measure of the power unbalance (P_{unb}, Q_{unb}).

2. A method as claimed in claim 1, wherein the measure (P_{unb(meas)}, Q_{unb(meas)}) of the power unbalance (P_{unb}, Q_{unb}) of the electricity network (EN) is decreased at the point of the electricity network (EN) if the measure (P_{unb(meas)}, Q_{unb(meas)}) of the power unbalance (P_{unb}, Q_{unb}) at the point of the electricity network (EN) is more than a maximum limit value (P_{unb(max_limit)}, Q_{unb(max_limit)}) set for the measure (P_{unb(meas)}, Q_{unb(meas)}) of the power unbalance (P_{unb}, Q_{unb}) at the point of the electricity network (EN).

3. A method as claimed in claim 1 or 2, wherein the point of the electricity network (EN), at which the islanding condition in the electricity network (EN) is monitored and the measure (P_{unb(meas)}, Q_{unb(meas)}) of the power unbalance (P_{unb}, Q_{unb}) of the electricity network (EN) is determined comprises a device capable of connecting and disconnecting parts of the electricity network (EN).

4. A method as claimed in any one of the preceding claims, wherein the measure (P_{unb(meas)}, Q_{unb(meas)}) of the power unbalance (P_{unb}, Q_{unb}) of the electricity network (EN) is controlled by controlling at least one of the following: a power output of a distributed energy resource unit (EU1, EU2, EU3) connected to the electricity network (EN), an operation of a load (L1. L2, L3, L4, L5, L6) connected to the electricity network (EN), and an operation of another network component (NC) capable of feeding or consuming power.

5. A method as claimed in any one of the preceding claims, wherein the power unbalance whose measure is to be determined is a reactive power unbalance (Q_{unb}).

6. A method as claimed in any one of the preceding claims, wherein the minimum limit value (P_{unb(min_limit)}, Q_{unb(min_limit)}) and/or the maximum limit value (P_{unb(max_limit)}, Q_{unb(max_limit)}) set for the power unbalance (P_{unb}, Q_{unb}) is/are adaptively determined on the basis of a prevailing electricity network (EN) topology configuration.

7. A method as claimed in any one of the preceding claims, wherein settings of a loss-of-mains-protection based on the passive islanding detection method are adaptively variable on the basis of the determined measure (P_{unb(meas)}, Q_{unb(meas)}) of the power unbalance (P_{unb}, Q_{unb}).

8. A method as claimed in any one of the preceding claims, wherein the electricity network (EN) comprises a number of galvanically interconnected feeders (F2, F3) and wherein the measures (P_{unb(meas)}, Q_{unb(meas)}) of the power unbalances (P_{unb}, Q_{unb}) at the beginning of the feeders (F2, F3) are controlled such that the measures (P_{unb(meas)}, Q_{unb(meas)}) of the power unbalances (P_{unb}, Q_{unb}) at the beginning of the feeders (F2, F3) substantially compensate each other.

9. A system for detecting an islanding condition in an electricity network (EN), the system comprising
means for monitoring at a point of the electricity network (EN) an islanding condition in the electricity network (EN) by at least one passive islanding detection method,
means for determining a measure (P_{unb(meas)}, Q_{unb(meas)}) of a power unbalance (P_{unb}, Q_{unb}) at the same point of the electricity network (EN),
means for comparing the determined measure (P_{unb(meas)}, Q_{unb(meas)}) of the power unbalance (P_{unb}, Q_{unb}) with a minimum limit value (P_{unb(min_limit)}, Q_{unb(min_limit)}) set for the power unbalance (P_{unb}, Q_{unb}) at the point of the electricity network (EN), and
means for controlling the measure (P_{unb(meas)}, Q_{unb(meas)}) of the power unbalance (P_{unb}, Q_{unb}) of the electricity network (EN) such that the determined measure (P_{unb(min_limit)}, Q_{unb(min_limit)}) of the power unbalance (P_{unb}, Q_{unb}) is at least equal to or more than the minimum limit value (P_{unb(min_limit)}, Q_{unb(min_limit)}) set for the measure (P_{unb(meas)}, Q_{unb(meas)}) of the power unbalance (P_{unb}, Q_{unb}).

10. A system as claimed in claim 9, wherein the means for controlling the measure (P_{unb(meas)}, Q_{unb(meas)}) of the power unbalance (P_{unb}, Q_{unb}) is arranged to decrease the measure (P_{unb(meas)}, Q_{unb(meas)}) of the power unbalance (P_{unb}, Q_{unb}) of the electricity network (EN) at the point of the electricity network (EN) if the determined measure (P_{unb(meas)}, Q_{unb(meas)}) of the power unbalance (P_{unb}, Q_{unb}) at the point of the electricity network (EN) is more than a maximum limit value (P_{unb(max_limit)}, Q_{unb(max_limit)}) set for the measure (P_{unb(meas)}, Q_{unb(meas)}) of the power unbalance (P_{unb}, Q_{unb}) at the point of the electricity network (EN).

11. A system as claimed in claim 9 or 10, wherein the point of the electricity network (EN), at which the islanding condition in the electricity network (EN) is monitored and the measure (P_{unb(meas)}, Q_{unb(meas)}) of the power unbalance (P_{unb}, Q_{unb}) of the electricity network (EN) is determined comprises a device capable of connecting and disconnecting parts of the electricity network (EN).

12. A system as claimed in any one of the preceding claims 9 to 11, wherein the means for controlling the measure (P_{unb(meas)}, Q_{unb(meas)}) of the power unbalance (P_{unb}, Q_{unb}) of the electricity network (EN) is configured to control at least one of the following: a power output of a distributed energy resource unit (EU1, EU2, EU3) connected to the electricity network (EN), an operation of a load (L1, L2, L3, L4, L5, L6) connected to the electricity network (EN), and an operation of another network component (NC) capable of feeding or consuming power.

13. A system as claimed in any one of the preceding claims 9 to 12, wherein the power unbalance whose measure is to be determined is a reactive power unbalance (Q_{unb}).

14. A system as claimed in any one of the preceding claims 9 to 13, wherein settings of a loss-of-mains-protection based on the passive islanding detection method are adaptively variable on the basis of the determined measure (P_{unb(meas)}, Q_{unb(meas)}) of the power unbalance (P_{unb}, Q_{unb}).

15. A system as claimed in any one of the preceding claims 9 to 14, wherein the electricity network (EN) comprises a number of galvanically interconnected feeders (F2, F3) and wherein the means for controlling the measures (P_{unb(meas)}, Q_{unb(meas)}) of the power unbalances (P_{unb}, Q_{unb}) of the feeders (F2, F3) is arranged to control the measures (P_{unb(meas)}, Q_{unb(meas)}) of the power unbalances (P_{unb}, Q_{unb}) at the beginning of the feeders (F2, F3) such that the measures (P_{unb(meas)}, Q_{unb(meas)}) of the power unbalances (P_{unb}, Q_{unb}) at the beginning of the feeders (F2, F3) substantially compensate each other.
